# EUROPEAN PATENT APPLICATION

(11) **EP 4 653 273 A1**
(43) Date of publication of application: **26.11.2025**
(21) Application number: 25189995.1
(22) Date of filing: 14.07.2022
(51) Int. Cl.: B60T 13/68, B60T 8/17

(54) **A TRAILER BRAKE SYSTEM**

(30) Priority: 14.07.2021 GB 202110157
(62) Divisional of application: 22743836.3
(71) Applicant: Haldex Brake Products AB, 26124 Landskrona (SE)
(72) Inventor: Harrison, Dudley, Lindley, CV13 6DE (GB)
(74) Representative: Forresters IP LLP

(57) **Abstract**

(Figure 1) A trailer brake system including: a spring brake, configured to apply a braking force to an associated wheel when a pressure in its brake chamber is below a threshold, and a service brake, configured to apply a demanded braking force dependent on a pressure present in its brake chamber, a master unit and an auxiliary unit, the master unit includes an electronic control unit that receives and processes signals including a CAN bus connection from a towing vehicle system, and controls a state of one or more valves, an input from a supply line, an input from a control line, and an output to the spring brake, the auxiliary unit including an electronic control unit, which receives control signals from the master unit and relays signals to the master unit, and an output to the service brake, and a first fluid tank and a second fluid tank, wherein the first fluid tank is filled by the supply line and connects to an inlet of the master unit and the second fluid tank is filled by the supply line and connects to an inlet of the auxiliary unit.

## Description

### Introduction

Embodiments of the present invention relate to a brake system for a trailer. The invention is particularly applicable to braking systems in trailers for heavy goods vehicles.

Braking systems are well known components within a vehicle for providing retardation force to stop a vehicle on demand. In a heavy goods vehicle, redundancy is often built in to ensure that even if a fault occurs, the vehicle may still be stopped. For example, often two connections between a towing vehicle and a trailer are provided - an electrical and pneumatic connection or, alternatively, two pneumatic connections. Thus, if one of the methods of connection should fail then the other may still convey the same braking demands to the trailer braking system.

As more sophisticated vehicle systems are developed, a human driver may no longer be required to drive a vehicle. However, in the case of accidents there is additional care needed. While there may be public acceptance of accidents caused by "driver error" there is less tolerance of autonomous vehicles being involved in and / or causing accidents without a driver present. Thus, there needs to additional fail safe systems in place, so that if a fault is found in the braking system, the autonomous vehicle can deal with it without causing the vehicle to be out of control and stop the vehicle at a safe location.

Embodiments of the present invention seek to alleviate one or more issues associated with the prior art.

According to a first aspect of the invention, we provide a trailer brake system including: a spring brake, configured to apply a braking force to an associated wheel when a pressure in its brake chamber is below a threshold, and a service brake, configured to apply a demanded braking force dependent on a pressure present in its brake chamber, a master unit and an auxiliary unit, the master unit includes an electronic control unit that receives and processes signals including a CAN bus connection from a towing vehicle system, and controls a state of one or more valves, an input from a supply line, an input from a control line, and an output to the spring brake, the auxiliary unit including an electronic control unit, which receives control signals from the master unit and relays signals to the master unit, and an output to the service brake, and a first fluid tank and a second fluid tank, wherein the first fluid tank is filled by the supply line and connects to an inlet of the master unit and the second fluid tank is filled by the supply line and connects to an inlet of the auxiliary unit.

According to a second aspect of the invention we provide a trailer brake system for a trailer including: an electronic control unit for sending and receiving signals; a spring brake, which is releasable by a supply of fluid, a service brake, which is applied by the supply of fluid, a control line for delivering fluid according to a brake demand, a supply line for delivering a continuous supply of fluid, a first fluid tank and a second fluid tank, each connected to the supply line via a separate connection and filled from the supply line, wherein the first fluid tank is connected to the spring brake and not to the service brake and the second fluid tank is connected to the service brake and not to the spring brake.

The first fluid tank, a fluid line between the first fluid tank and the spring brake, and the connected spring brake may form a spring brake circuit. The spring brake circuit may also include the master unit. The master unit may be located between the first fluid tank and the spring brake

Further, the second fluid tank, a fluid line between the second fluid tank and the service brake, and the connected service brake may form a service brake circuit. The service brake circuit may include the auxiliary unit. The auxiliary unit may be located between the second fluid tank and the service brake.

The system may include a pressure protection valve. In such an example, the first fluid tank is fed through the pressure protection valve, such that the first fluid tank fills only when a pressure in the supply line exceeds a predetermined value. Back flow from the first fluid tank towards the supply line (i.e. the connection to the towing vehicle) may be prevented - optionally it is prevented by the pressure protection valve.

The second fluid tank may be fed through a non-return valve, so that fluid cannot return from the second fluid tank towards the supply line.

The system may include a dedicated park valve for park and/or shunt functionality. The first fluid tank and / or the second fluid tank may be fed from ports of the park valve.

The system may include a first pressure sensor, which may be positioned to detect pressure on the control line. The system may include a second pressure sensor, which may be positioned to detect pressure on a fluid line between the second fluid tank and the service brake. The second pressure sensor may output a signal relating to a pressure in the service brake circuit.

The system may include a shuttle valve between the control line and the supply line.

An output of the second fluid tank may connect to a second pressure protection valve. The second pressure protection valve may feed a suspension system, such that pressure in the second fluid tank above a predetermined value may be used for levelling control. A pressure in the suspension system may be monitored by the auxiliary unit.

The system may include a first power line which includes a supply voltage and a CAN connection. The system may include a second power line which includes a secondary supply voltage and optionally may include stop lamp signals or another communication line. The first and second power lines may connect to the master unit. A third power line may be connected between the master unit and the auxiliary unit. Optionally, the third power line may also include a local CAN connection between the master unit and the auxiliary unit. The first power line may be connected directly to the master unit and the second power line may be connected to a distributor device, which may relay the second power line to the master unit. The distributor device may also receive a power and local CAN connection from the master unit and may connect the power and local CAN connection to the auxiliary unit.

The master unit may include one or more of the following: a first port providing a first inlet for connection to the supply line, a second port providing a second inlet for connection to the first fluid tank, a third port providing a third inlet, a fourth port providing a first outlet for connection to the spring brake and which receives the pressure from the third inlet, and a fifth port providing a second outlet to provide a feedback loop from the first and second ports to the third port.

The system may include a shuttle valve provided with an inlet connected to the control line and the fifth port and the outlet may be connected to the third port. The shuttle may act to provide anti-compound functionality by inhibiting the application of the spring brake and the service brake at the same time. The fourth port may connect to the spring brake via a spring brake control valve, which operates to control the supply of fluid to the spring brake.

The system may include an electrically operable override valve which may be connected to the first port, second port and the third port, such that if pressure in the supply line falls below a predetermined value, the first fluid tank may be connected to the spring brake instead of the supply line. The system may be operable so that if the master unit detects that the pressure in the service brake circuit falls below a predetermined value, the master unit is configured to use the first fluid tank to modulate the application of the spring brake according to a demand on the control line.

The auxiliary unit may include one or more of the following: a first port providing a first inlet for connection to the second fluid tank, a second port providing a second inlet for connection to the control line, and an third port providing a first outlet for connection to the service brake. The first fluid tank may not be connected to the service brake and wherein the second fluid tank may not be connected to the spring brake.

In order that the present disclosure may be more readily understood, embodiments thereof will now be described, by way of example only, with reference to the accompanying drawings, in which:
FIGURE 1 is a schematic illustration of a first embodiment of the present disclosure;
FIGURE 2 is a schematic illustration of the first embodiment including alternative power line;
FIGURE 3 is a schematic illustration of a second embodiment of the present disclosure;
FIGURE 4 is a schematic illustration of a third embodiment of the present disclosure;
FIGURE 5 is a schematic illustration of a fourth embodiment of the present disclosure;
FIGURE 6 is a schematic illustration of a fifth embodiment of the present disclosure;
FIGURE 7 is a schematic illustration of a sixth embodiment of the present disclosure; and
FIGURE 8 is a schematic illustration of a part of the first embodiment.

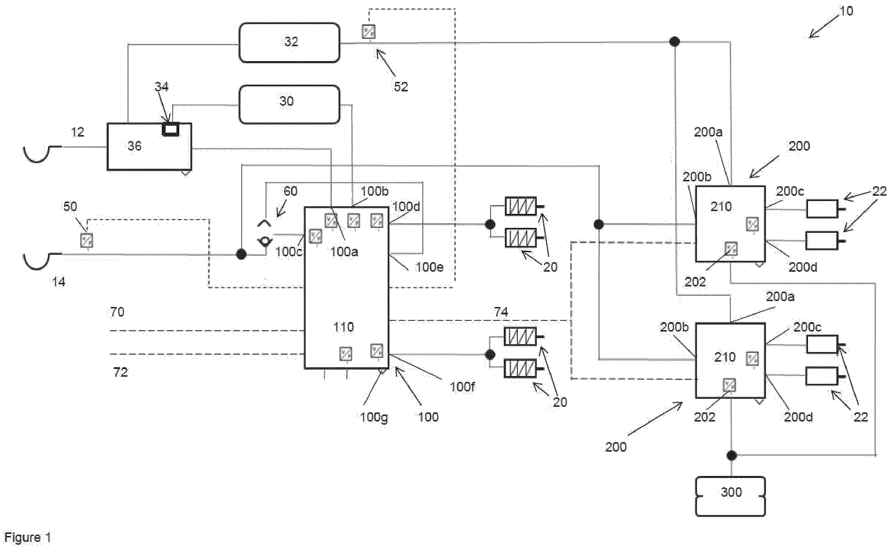

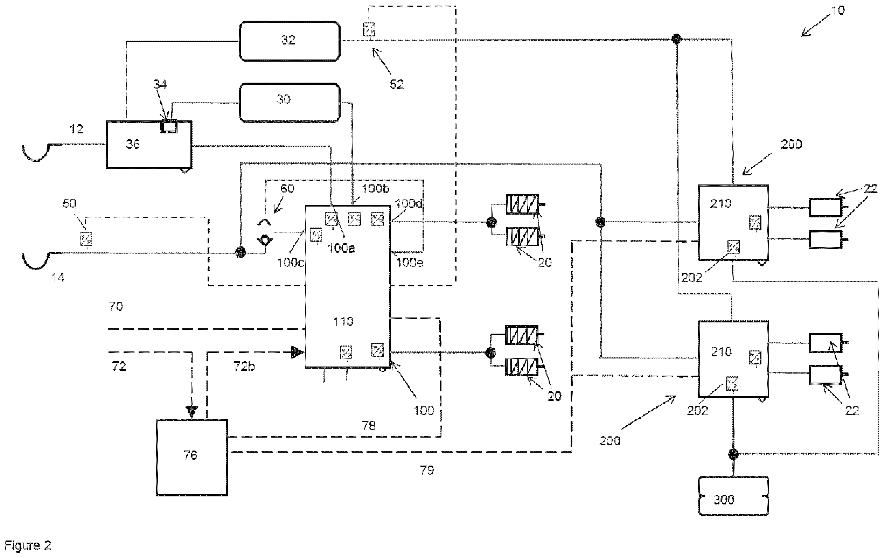

The present disclosure relates to a brake system for a trailer that connects to a towing vehicle and has its own dedicated braking system that connects and interacts with the braking system provided on the towing vehicle. The trailer has at least one axle with a wheel on opposing sides and may have multiple axles with many pairs of wheels. Each wheel may have an associated brake, which is discussed in more detail below. A suitable trailer brake system (TEBS) 10 is shown in figures 1 and 2.

The TEBS 10 includes two fluid connections which are configured to be connected to a relevant connector on a towing vehicle. The first fluid line connects to a continuous supply of fluid (hereafter called the supply line 12) and the second fluid line is pressurised only when a driver demands braking, for example, through use of a foot pedal (hereafter called the control line 14).

The TEBS 10 further includes a spring brake 20, a service brake 22, an electronic control unit (ECU) 110, which is configured to receive and send signals, a first fluid tank 30 and a second fluid tank 32. In some embodiments, each wheel may have an associated spring and service brake 20, 22 but it should be appreciated that this does not need to be the case. In some systems, a service brake 22 may be associated with every wheel and a spring brake 20 may only be provided on selected wheels / axles.

The spring brake 20 is configured to release when its brake chamber is pressurised - i.e. the spring brake stops applying braking force when fluid is provided. When the brake chamber pressure drops below a predetermined value (i.e. when the chamber is vented to atmosphere), the spring brake applies to provide a braking force.

The service brake 22 is configured to apply a braking force to its associated wheel when a demand is present. A demand may be initiated by the driver pressing a foot brake or by the ECU 16 determining that the service brake 22 should be applied (e.g. after a diagnostic procedure assessing the stability of the vehicle). The service brake 22 applies when a pressure is present in its brake chamber (and the size of the braking force applied is proportional to the pressure present). When a demand for service braking is not present, pressure in the service brake chamber is low / below a predetermined value (and may be vented to atmosphere) and the service brake 22 releases.

In some embodiments of the technology, the ECU 110 is part of a master unit 100 that controls many functions within the TEBS 10. The ECU 110 has a connection to the braking system on the towing vehicle, which includes a CAN connection and a power connection. The ECU 16 may also provide a main hub for local CAN connections (such as those connected to one or more auxiliary units 200 - described in more detail below). The master unit 100 also includes multiple integrated pressure sensors and / or connections to external pressure sensors, which provide feedback on the pressure present in various fluid lines within the TEBS 10.

The master unit 100 controls the state of at least one (but often multiple) valves that control the distribution of fluid around the system and particularly the distribution of fluid to the spring brake 20. In the illustrated example, the valve(s) are integrated within the master unit 100 and the unit 100 also has an input from the supply line 12, an input from the control line 14 and an output to the spring brake 20. In other words, the master unit 100 includes a fluid connection to the supply line 12, the control line 14 and the spring brake 20. It should be appreciated that the spring brake 20 may have additional valve(s) (which are not integrated within the master unit 100) that allow the application/release of brake pressure to be completed faster (or allows the provision of additional functionality).

The first fluid tank 30 is connected to the supply line 12 and (in normal operating conditions) is kept consistently full. The first fluid tank 30 is connected to the spring brake 20. In the illustrated examples, the spring brake 20 is connected to the first fluid tank 30 via the master unit 100. In other words, the first fluid tank 30 and the spring brake 20 form at least a part of a spring brake circuit (which does not include a fluid connection to the service brake 22). The first fluid tank 30 is not connected to the service brake 22. In other words, there is no fluid connection downstream of the first fluid tank 30 (the direction the fluid flows in through the system) and the service brake 22 possible. This is irrespective of any condition of any valve in the system - in essence the first fluid tank 30 is incapable of being connected to the service brake 22.

The spring brake circuit includes the fluid connections within / through the master unit 100. It should be appreciated that the ECU 110 still receives, processes and send electronic signals relating to the service brake (and other components within the system) but the fluid connections within the master unit 100 are dedicated to the operation of the spring brake 20.

In some embodiments, the connection between the supply line 12 and the first fluid tank 30 includes a pressure protection valve (PPV) 34. The pressure protection valve 34, allows fluid through it only when the pressure is above a predetermined threshold. Thus, the first fluid tank 30 is only filled when there is sufficient pressure in the supply line to overcome the threshold of the PPV 34.

The PPV 34 may also include non-return functionality, which prevents back flow from the first fluid tank 30 towards the supply line. Thus, if the pressure in the supply line 12 drops below the PPV 34 threshold, fluid cannot drain from the first fluid tank 30 back into the supply line 12.

It should be appreciated that while the PPV 34 only allows fluid to flow towards the first fluid tank 30 when the pressure in the supply line 12 exceeds a predetermined value, the non-return functionality is maintained irrespective of the pressure in the supply line 12. This is advantageous because there are no other components that "consume" fluid (i.e. use fluid to function) beyond the PPV 34 besides the spring brake 20, which means that the spring brake 20 is isolated from fluctuations in the supply line 12 pressure in normal operation. In other words, having the PPV 34 "upstream" of the first fluid tank 30 builds in an additional level of stabilisation to the fluid pressure supplied to the spring brake 20.

In some embodiments, a pressure sensor 50 is positioned to monitor the pressure in the control line 14. The pressure sensor 50 is connected to the ECU 110, so that the status / pressure of the control line 14 is monitored.

A further (second) pressure sensor 52 may be positioned to monitor the supply line pressure between the second fluid tank 32 and the service brake 22. The second pressure sensor 52 is also connected to the ECU 110, so that the state / pressure of the supply to the service brake 22 is monitored. The feedback from the second pressure sensor 52 provides information about the service brake circuit to the ECU 110.

In some embodiments, an anti-compounding valve (ACV) or shuttle valve 60 is included. The anti-compound valve 60 prevents or at least inhibits the applications of both the spring and service brake 20, 22 at the same time. In the example illustrated in figure 1, the ACV 60 is provided between the supply line 12 and the control line 14. Full details of how the ACV 60 functions are detailed further below where the ports of the master unit 100 are discussed.

In some embodiments (such as illustrated in figure 1), the TEBS 10 includes an auxiliary unit 200 (in figure 1 there are two auxiliary units 200 and each of them operates in the same manner). The auxiliary unit 200 also includes an electronic control unit 210, which receives control signals from the master unit 100 and relays signals to the master unit 100. In other words, the auxiliary unit 200 is connected to the local CAN network on the trailer and receives appropriate signals from the master unit 100 relating to the operation of the service brake 22.

In some embodiments, the auxiliary unit 200 includes a pressure sensor 202 which is connected to the air bellows 300 of the suspension / levelling system. The signals from the pressure sensor 202 may be relayed to the master unit 100. In normal driving conditions, the auxiliary unit 200 controls the operation of the service brake 22. The auxiliary unit 200 may receive electrical control signals from the master unit 100 (on the local CAN) relating to operation needed but the auxiliary unit 200 is capable of operating the service brake 22 independently. This has the advantage of providing a back-up if the master unit 100 should fail (discussed further below).

The auxiliary unit 200 also includes a (fluid) connection to the supply line 12, the control line 14 and the service brake 22.

The second fluid tank 32 is connected to the supply line 12 via a separate connection (i.e. separate from the connection between the supply line 12 and the first fluid tank 30) and is kept full in a similar manner to the first fluid tank 30. The second fluid tank 32 is connected to the service brake 22. In the illustrated examples, the service brake 22 connects to the service tank 32 via the auxiliary unit 200 (the supply line 12 connection to the auxiliary unit 200 also includes the second fluid tank 32). In a similar way to the spring brake circuit, the second fluid tank 32 and the service brake 22 form at least part of a service brake circuit (which does not include a fluid connection to the spring brake 20 (or the spring brake circuit). The second fluid tank 32 is not connected to the spring brake 20. In other words, there is no fluid connection downstream of the second fluid tank 32 (the direction the fluid flows in through the system) and the spring brake 20 possible. This is irrespective of any condition of any valve in the system - in essence the second fluid tank 32 is incapable of being connected to the spring brake 20.

Additionally, the auxiliary unit 200 may be considered part of the service brake circuit. As discussed above in relation to the ECU 110, the ECU 210 may also process signals that do not relate to the service brake 22 (for example, signals relating to the pressure in the air bellows and other details about the suspension / levelling system) but the fluid connections within / through the auxiliary unit 200 are used exclusively for the operation of the service brake 22.

In some embodiments, the connection between the second fluid tank 32 and the supply line 12 includes a non-return or one-way valve (not shown). This prevents fluid returning from the second fluid tank 32 towards the supply line 12 (for example, if the pressure in the supply line 12 is lost).

In some embodiments, a second pressure protection valve (not shown) is provided from the second fluid tank 32. The second pressure protection valve may be connected to further auxiliary functions of the trailer, for example, the suspension / levelling system. It should be appreciated that the second pressure protection valve acts in the same way as the PPV 34 described above, so that fluid may only pass the valve if the pressure is above a predetermined threshold. This protects and prioritises the brake system in the event of a reduction or loss of pressure in the supply line 12. In other words, the other functions such as the suspension are not fed with any fluid if the supply pressure is not sufficiently high to make it safe at the same time as operating the brakes as desired.

In some embodiments, the TEBS 10 includes a dedicated park valve 36. The park valve 36 provides a park and / or shunt functionality for the trailer. Park functionality allows the spring brake 20 to be applied manually, for example, when the vehicle is parked and the trailer is stopped for an extended period of time. Shunt functionality allows the trailer to be moved short distances without being hooked up to a towing vehicle, for example, in a warehouse facility where a trailer be disconnected from a towing vehicle and left to be emptied at a later time.

In some embodiments, both the first and second fluid tanks 30, 32 are connected to ports of the park valve 36, which (during normal driving operation) is connected to directly to the supply line 12.

In some embodiments, additional power may be required to provide a back-up supply. A first power line 70 is supplied to the ECU 110, which includes both a supply voltage and a CAN connection through a standard ISO7638 and ISO11992 configured connection. A second power line 72 is also provided which includes a secondary supply voltage and, optionally, another connection (this could be the stop lamps or another communication method may be included to provide complete additional redundancy for the CAN connection).

In some embodiments, the first and second power lines 70, 72 both connect to the master unit 100 and the master unit 100 provides an additional third power line 74 to connect to the auxiliary unit 200 (for example, in the same connection line as the local CAN connection).

Alternatively, a distributor device 76 could be included (an example of this is provided in the system illustrated in figure 2). In this example, the first power line 70 is connected directly to the ECU 110 and the second power line 72 is connected to the distributor device 76. The distributor device 76 feeds the second power line 72b on to the ECU 110 / master unit 100 and receives the local CAN signals from the master unit 100 via line 78. The distributor device 76 relays a supply voltage and the local CAN connection on to the auxiliary unit 200 via line 79.

The configuration of the master unit 100 will now be described in more detail. The master unit 100 includes first to fifth ports 100a-e. The first port 100a provides a first inlet for connection to the supply line 12. The second port 100b provides a second inlet for connection to the first fluid tank 30. The third port 100c provides a third inlet and receives a feedback from the fifth port 100e or is connected to the control line 14.

The fourth port 100d provides a first outlet for connection to the spring brake 22. The fourth port 100d is connected to the third inlet 100c internally (through a brake modulator valve system), such that the pressure input at the third port 100c is output at the fourth port 100d. In this example, the pressure provided at the fourth port 100d controls the pressure permitted to the spring brake 20. Alongside this control, the first fluid tank 30 provides the fluid to the spring brake chamber and allows the spring brake to be released.

The spring brake 20 includes spring brake control valve (not shown) which operates to control the supply of fluid to the brake chamber of the spring brake 20. In some embodiments, the spring brake control valve includes a one-way or check valve. This allows the spring brake to be isolated from its supply if necessary - the pressure within the spring brake chamber is held (and not vented) and the one-way valve stops fluid from flowing back towards the master unit 100. Thus, the pressure within the spring brake 20 can be maintained and the spring brake 20 held in a released position.

The fifth port 100e provides a second outlet and is a feedback loop from the first and second ports 100a, b to the third port 100c. The first and second ports 100a, b are fed (internally) to valves which allow the ECU 110 to control which of the first and second inputs is output to the fifth port 100e (which is then input to the third port 100c and dictates what pressure is output to the spring brake 20. By default (i.e. when the system is all working normally) the supply line 12 is connected to the third port 100c. However, the ECU 110 is able to override that normal state and connect the first fluid tank 30 to the fifth port 100e instead. In other words, an electrically operated override valve is provided, which is operable by the ECU 110 such that if pressure in the supply line 12 falls below a predetermined value, the first fluid tank 30 is connected to the spring brake 20 instead of the supply line 12.

An exhaust 100g may be provided, so that unwanted pressure within the master unit 100 may be released to atmosphere.

In embodiments including an ACV 60, one inlet is connected to the fifth port 100e (i.e. the supply line 12 or the first fluid tank 30 pressure) and the second inlet is connected to the control line 14. Whichever of the fifth port 100e and the control line 14 has the highest pressure will be fed through the third port 100c (and to the spring brake 20). This prevents the spring brake 20 and the service brake 22 from being applied at the same time.

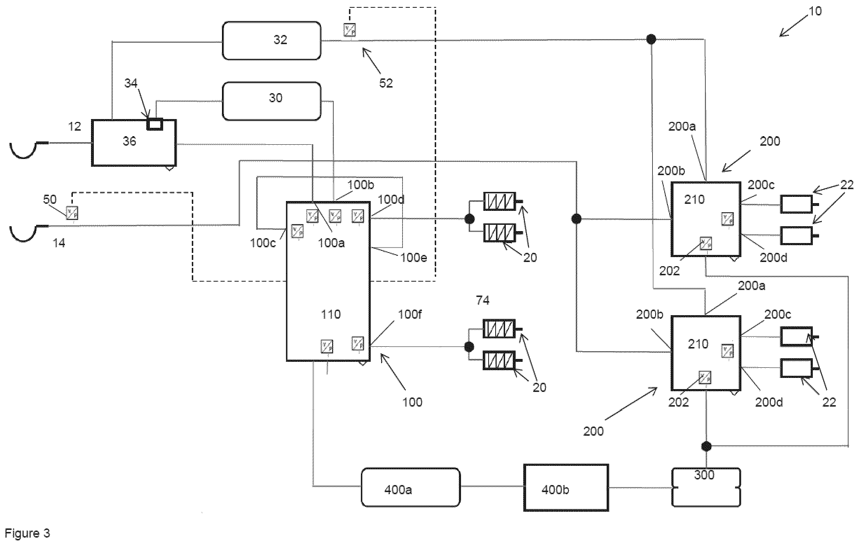

Alternatively, if an ACV is not provided, the output from the fifth port 100e is fed to the third port 100c irrespective of whether there is demand for service braking (if the control line 14 pressure exceeds the supply line 12 / first fluid tank 30 pressure). Figure 3 illustrates such a TEBS 10 without an ACV - other differences are discussed below.

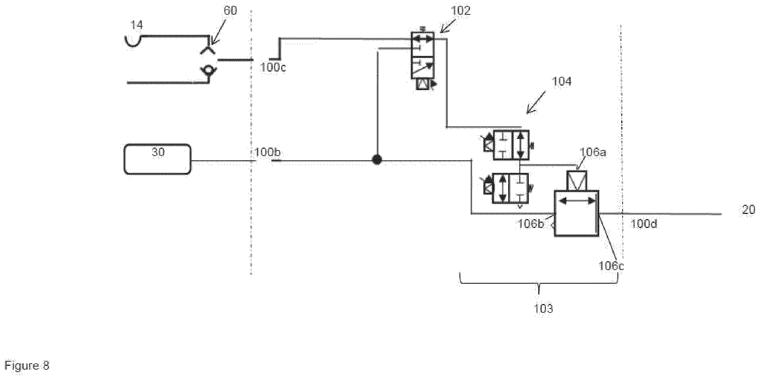

In some embodiments, there is a modulator valve system 103 between the third port 100c and the fourth port 100d. An example of how this path may be configured is shown in figure 8. An electrically operated valve 102 has a first inlet connected to the third port 100c (i.e. the control line 14 or the output from the fifth port 100e) and a second inlet connected to the first fluid tank 30. An outlet is connected to a modulator valve 104. The modulator valve 104 operates to provides three defined control states - a "build" state where the pressure is to be increased in the connected brake, a "hold" state which maintains the current pressure with no alteration occurring, and an "exhaust" state in which fluid is exhausted (and the brake pressure is also exhausted).

The modulator valve system may include a relay valve 106, which includes a control port 106a which is connected to the modulator valve 104 (and subsequently the electrically operated valve 102) and the pressure at the control port 106a controls the fluid through the valve from the inlet 106b to the outlet 106c (and on to the spring brake 20). Thus in normal operation, the supply line 12 pressure will be present at the third port 100c, which controls the fluid through the relay valve 106 and the spring brake 20 is held in a released state. The relay valve 106 ensures fast application and release of pressure.

In some embodiments, the modulator valve 104 has a small annular area force contribution from the inlet port onto the control side of the piston.

If and as the first fluid tank 30 depletes, the exhaust port may open very slightly, self-regulating the modulator valve 104 to equilibrium. Further, if there is a force to a delivery side of the piston then the valve inlet could open. This opening can be anticipated and countered by instead using the solenoids to release pressure from the control side of the piston and, thus, prevent this from happening. It should be appreciated that this is a small effect and would not prevent the system from maintaining the spring brake 20 in a released state.

In some embodiments, the master unit 100 further includes a sixth port 100f. The sixth port 100f provides a second outlet to another spring brake 20. In other words, the spring brakes 20 connected to the fourth port 100d are associated with one axle and the spring brakes 220 connected to the sixth port 100f are associated with another axle. This provides advantageous control when a fault is detected and is discussed in more detail below.

In some embodiments, pressure sensors are positioned at various ports of the master unit 100 to monitor the pressure within the system. Pressure sensors at the first and second ports measure the pressure present in the supply line 12 and the pressure in the first fluid tank 30. A pressure sensor at the fourth and the sixth ports 100d, f measure the pressure being output to each of the sets of spring brakes 20.

In some embodiments, wherein the auxiliary unit includes a first port 200a which provides a first inlet for connection to the second fluid tank 32, a second port 200b providing a second inlet for connection to the control line 14, and an third port 200c providing a first outlet for connection to the service brake 22. In some embodiments, a further fourth port 200d is provided, which also serves as an output to service brake 22 (this may be used for an auxiliary unit 200 controlling more than one service brake, so that ABS / asymmetrical service braking can be implemented).

The various processes for dealing with faults will now be discussed. For context, in normal operation (i.e. when the vehicle is moving and the is no fault within the TEBS 10), the spring brake 20 is held in a released positions by continuous supply line 12 pressure and the service brake 22 is operated using fluid from the supply line 12 when a demand by the driver or the ECU 110 is issued (either via the CAN connection or by the control line 14). Both the first and second fluid tanks 30, 32 will be maintained at or towards full capacity because the pressure on the supply line 12 is always sufficient.

If the supply line 12 is lost (e.g. through a disconnection or rupture or the like), the pressure flowing through to the first port 100a of the master unit 100 will decrease below a threshold, for example around 5.5 bar or below (i.e. the pressure value at which the brakes can still be safely used). Without intervention by the ECU 110, the spring brake 20 applies because the supply line 12 pressure feeds directly into the spring brake 20. Instead, the ECU 110 confirms that there is sufficient pressure in the first fluid tank 30 to release the spring brakes. If so, the ECU 110 overrides the default action by switching the supply to the spring brake 20 to the first fluid tank 30.

The service brake 22 is still fully operational using the pressure present in the second fluid tank 32 and the control line 14 pressure. If the ECU 110 assesses that the pressure in the second fluid tank drops below a predetermined threshold (e.g. around 4.5 bar), the service brakes are autonomously applied by the ECU 110. Alternatively, the ECU 110 could modulate the application of the spring brake 20 instead of the service brake 22 using the first fluid tank 30 as a supply.

If the control line 14 suffers a fault (this will only occur when a demand for service braking is made from the towing vehicle), this is detected by the system on the towing vehicle. In such a situation, the supply line 12 is used to control the service brake 22. The auxiliary unit includes an electrically operable override that connects the supply line 12 to the service brake 22 rather than the control line 14. As such, normal braking functionality is provided and a normal driving state is resumed once the braking demand is finished.

If pressure loss is experienced in the service brake circuit (i.e. a rupture or disconnection anywhere between the connection to the supply line 12 through the second fluid tank 30 and to the service brake 22 (and through the auxiliary unit 200), the supply line 12 will attempt to compensate for the loss. If the supply pressure is not high enough, then the same fault occurs as above for a supply line 12 failure.

If pressure is lost in the spring brake circuit (i.e. a rupture or disconnection anywhere between the connection to the supply line 12 through to the third port 100c of the master unit 100) - in other words, in the spring brake supply side of the spring brake circuit - the ECU 110 is able to maintain the spring brake 20 in a released state.

Referring to the example set out in figure 8, the internal valves are electrically operable to isolate the spring brake 20 from the loss in pressure at the second and third ports 100b, c. The modulator valve 104 is placed in a hold state to maintain the pressure at the relay 106 control. This stops any action occurring at the relay valve 106 and the system is placed in an "equilibrium" state where the pressure does not change (and the spring brake 20 is maintained in a released state).

If pressure is lost downstream of the master unit 100 (i.e. between either the fourth port 100d and the spring brake chamber or between the sixth port 100f and the spring brake chamber), then the loss of pressure is detected by the associated pressure sensor. The ECU 110 isolates the affected spring brake from the system to stop the supply line 12 / first fluid tank 30 from depleting constantly. The unaffected spring brake 20 is still operational and held in a released state. The spring brake 20 on the affected side of the circuit will be applied due to the loss of pressure. Normal service braking is available on the unaffected wheels/axle. The wheels that remain fully operational may be different depending on the characteristics of the trailer (i.e. how many axles and whether it is a full trailer or dolly arrangement). If there are multiple axles, then a whole axle may be affected (as the spring brakes are supplied axle by axle) while the other axles remain unaffected. If there is a single axle, then one side may be affected (as the spring brakes are supplied separately for each side) while the other side remains unaffected. If the trailer is a dolly, there may be no split between the supply to the spring brakes and the whole dolly may be affected.

If the master unit 100 suffers a fault, it should be appreciated that the auxiliary unit 200 is able to operate independently to control the service brake 22. Furthermore, if there is power loss in the master unit 100, the auxiliary unit 200 is able to ensure correct operation of the service brake using the pneumatic connections provided. The auxiliary unit 200 is also able to provide some high-level functions, such as anti-lock braking, without any control from the master unit 100 if necessary. Further, the spring brake would also be maintained in a released state due to the pressure in the supply and the master unit 100 operating in a "push through" mode in which the pressure supplied is pushed to the outlet.

If power is lost both the master unit 100 and the auxiliary unit 200 normal braking will be provided through the pneumatic connections provided.

It should be appreciated that all of the described interventions are not designed to be used for extended periods of time. The aim is to avoid the brakes on the vehicle applying / locking uncontrollably and making the vehicle impossible to drive / potentially causing an accident, while alerting a driver (if there is one present) and allowing time for the vehicle to be pulled off a road / carriageway and stopped in a safe manner.

Therefore, in the case where a driver is present, each of the pressure losses described above will result in an alarm / warning to the driver in the towing vehicle. In the case where a driver is not present, the towing vehicle autonomous system will receive the alarm / warning and the system will navigate to a safe space and alert an engineer wirelessly.

Each of the further figures included illustrates alternative ways in which the required redundancy / safety processes can be implemented. Where components in the alternative system are the same to those already described, they have been labelled with the same reference number. It should be appreciated these components work as described above unless an alternative is presented below.

In some embodiments (such as figure 3), the suspension / levelling system 400a, b supplying and controlling the flow of air to the bellows 300 is connected to the master unit 100. In this example, another PPV (not shown) is located in the master unit 100 and connected to the suspension / levelling system 400a, 400b, so that when the pressure in the supply line 12 exceeds a predetermined value, the PPV allows fluid to be used in the suspension system 400a and for levelling purposes.

In this example, a PPV connecting to the second fluid tank 32 and supplying the suspension / levelling system is not required.

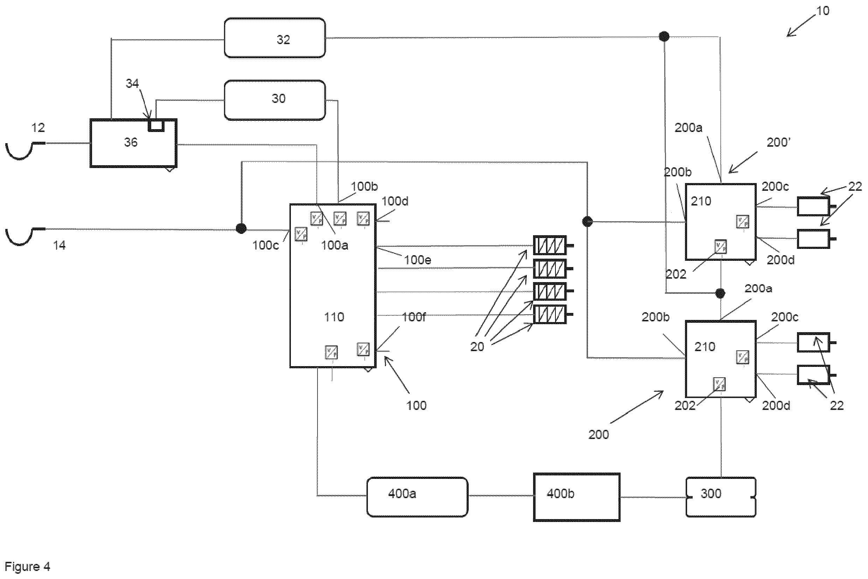

In some embodiments (such as those illustrated in figures 4 to 6), the ports of the master unit 100 are allocated differently. The first port 100a is connected to the supply line 12 and the second port 100b is connected to the first fluid tank 30 as described above. The third port 100c is connected directly to the control line 14. The fifth port 100e is connected to the spring brake 20 (in figure 4, four spring brakes 20 are illustrated, each of which is supplied from the fifth port 100e, which is split to connect to each spring brake 20).

In this case, the override valve (in the master unit 100) is connected directly between the first and second ports 100a, b and the fifth port 100f going to the spring brake 20.

The fourth port and sixth ports 100d, 100f are not used. In a traditional system, which does not provide high redundancy, the fourth and sixth ports may be connected to the service brakes.

In this illustrated example, the service brakes 22 are connected to a pair of auxiliary units 200, 200'. The auxiliary unit 200 is configured in the same way as already described above. The first port 200a connects to the supply line 12 via the second fluid tank 32, the second port 200b connects to the control line 14 and the third and fourth ports 200c, d are outputs to the service brakes 22. A pressure sensor 202 is connected to the air bellows 300.

The auxiliary unit 200' is configured only very slightly differently. Instead of pressure sensor providing feedback relating to the air bellows, the pressure sensor 202' is instead connected to the supply line 12. This permits the auxiliary unit 200' to monitor the service brake circuit directly. The auxiliary unit 200' sends the output from the pressure sensor 202' to the master unit 100.

Pressure loss in the supply line 12 or the service brake circuit will cause a loss of pressure at the first port 100a of the master unit. As discussed above, the ECU 110 overrides the automatic application of the spring brakes, by connecting the spring brake 20 to the first fluid tank 30 (instead of the supply line 12). Likewise, the one way valve in the spring brake control valve will prevent the application of the spring brake 20 in the event the pressure in the first fluid tank 30 is lost also. Service braking is still possible, using the control line 14.

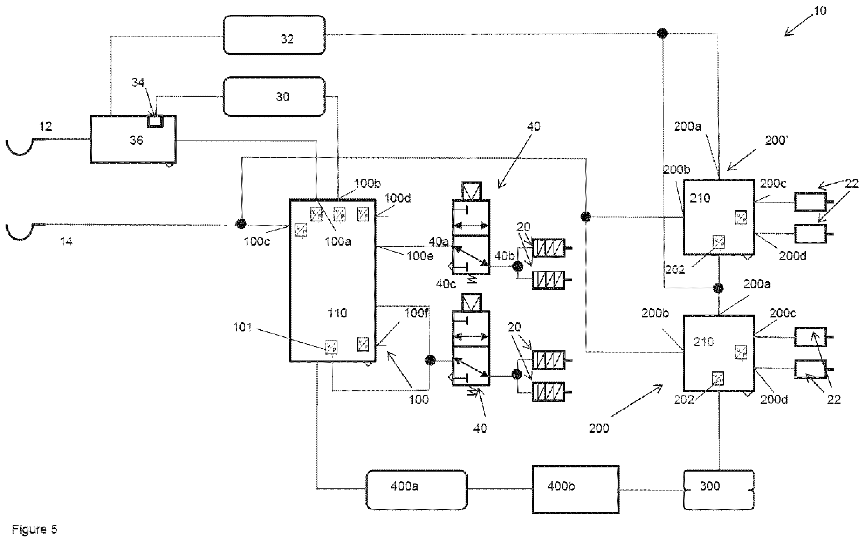

In embodiments, (such as the example illustrated in figure 5), the ports of the master unit 100 are generally allocated in the same way as described above in relation to figure 4. The output from the fifth port 100e is again split between the spring brakes 20 (in this case, two spring brake auxiliary system are formed) and an additional connection is provided to a pressure sensor of the master unit 100.

Each spring brake auxiliary system includes the normal spring brake 20 (with spring brake control valve and chambers, etc.) and an additional valve (in this example, a 3-port / 2-state solenoid valve 40). Each solenoid valve 40 includes an inlet 40a, which connects to the master unit 100, an outlet 40b, which connects to the spring brake 20 and an exhaust 40c.

This arrangement enables the system to isolate a spring brake 20 in the case that a leak is present in the "delivery" side of the spring circuit (i.e. downstream of the master unit 100). The isolated spring brake 20 will apply (due to low pressure) but the remainder of the spring brakes are not affected by the pressure leak and are able to continue operating.

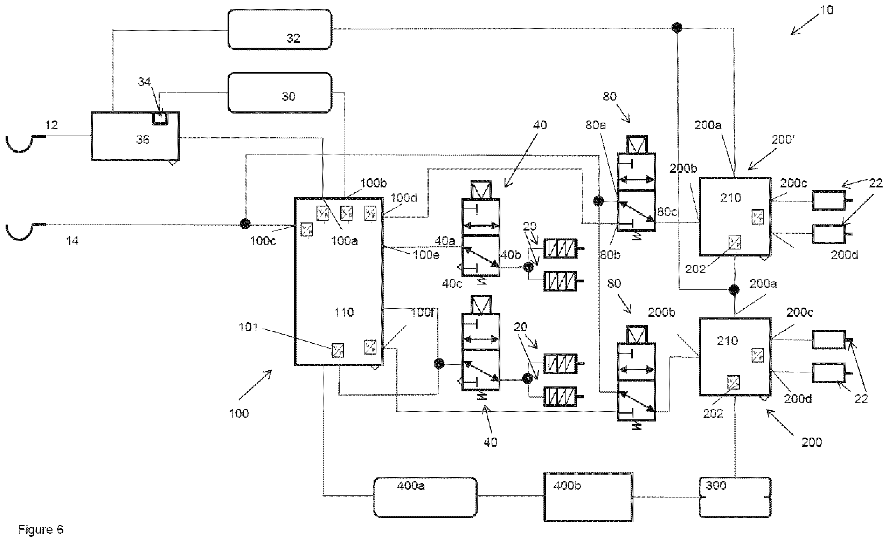

The example illustrated in figure 6 has generally the same configuration of master unit 100 to that illustrated in figure 5 with an exception that the two previous unused ports (the fourth and sixth ports 100d and 100f) are now used in relation to the service brakes 22. The third port 100c connects to the fourth and sixth ports 100d, f in the same way as described above in relation to the first embodiment but different brakes are connected to the port. In this system, two additional 3-port / 2-state solenoid valves 80 are used to connect the master unit 100 to the service brakes 22 which would be used in the event of auxiliary unit 200, 200' failure.

Each valve 80 includes an inlet 80a, which provides a connection to the control line 14 directly, a second inlet 80b, which provides a connection to the control line 14 via the master unit 100, and an outlet 80c, which provides a connection to the service brakes 22.

In this example, the master unit 100 is able to take control of the service brake 22 in the event the auxiliary unit 200 fails. The auxiliary unit 200 automatically defaults to a "push through" mode in which any pressure presented at the second port 200b is delivered to the third and fourth ports 200c, d. Thus, the additional valves 80 allow the master unit 100 to connect to the auxiliary unit 200 and "push through" a braking demand to the service brakes 22.

An advantage of this configuration over that provided in figure 5 is that functionality provided by fully operating service brakes 22, such as anti-lock, roll-over control and load regulated braking is still available (albeit controlled by the master unit 100).

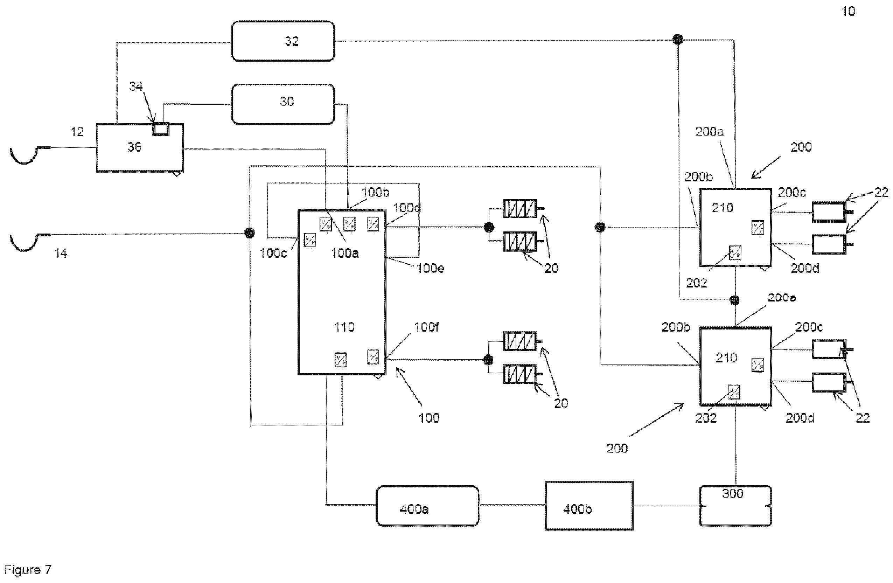

The example system illustrated in figure 7 has a layout / configuration similar to that of the example discussed in figure 3. The main difference is that the pressure sensor 101 on the master unit 100 is connected to the control line 14. Thus, the master unit 100 is able to monitor the pressure in the control line 14 even though it is not an input at the third port 100c (as in the earlier example).

The following clauses set out additional exemplary features of a preferred embodiment.

Clause 1. A trailer brake system including:
a spring brake, configured to apply a braking force to an associated wheel when a pressure in its brake chamber is below a threshold, and a service brake, configured to apply a demanded braking force dependent on a pressure present in its brake chamber,
a master unit and an auxiliary unit,
the master unit includes an electronic control unit that receives and processes signals including a CAN bus connection from a towing vehicle system, and controls a state of one or more valves, an input from a supply line, an input from a control line, and an output to the spring brake,
the auxiliary unit including an electronic control unit, which receives control signals from the master unit and relays signals to the master unit, and an output to the service brake, and a first fluid tank and a second fluid tank, wherein the first fluid tank is filled by the supply line and connects to an inlet of the master unit and the second fluid tank is filled by the supply line and connects to an inlet of the auxiliary unit.

Clause 2. A trailer brake system according to clause 1 wherein the master unit includes:
a first port providing a first inlet for connection to the supply line
a second port providing a second inlet for connection to the first fluid tank a third port providing a third inlet,
a fourth port providing a first outlet for connection to the spring brake and which receives the pressure from the third inlet, and
a fifth port providing a second outlet to provide a feedback loop from the first and second ports to the third port.

Clause 3. A trailer brake system according to clause 2 wherein a shuttle valve is provided with an inlet connected to the control line and the fifth port and the outlet connected to the third port.

Clause 4. A trailer brake system according to clause 3 wherein the shuttle acts to provide anti-compound functionality by inhibiting the application of the spring brake and the service brake at the same time.

Clause 5. A trailer brake system according to any of clause 2 to 4 wherein the fourth port connects to the spring brake via a spring brake control valve, which operates to control the supply of fluid to the spring brake.

Clause 6. A trailer brake system according to any of clause 2 to 5 wherein an electrically operable override valve is connected to the first port, second port and the third port, such that if pressure in the supply line falls below a predetermined value, the spring brake is connected to the first fluid tank instead of the supply line.

Clause 7. A trailer brake system according to any of clauses 5 or 6 wherein if the master unit detects that the pressure in the service brake circuit falls below a predetermined value, the master unit is configured to use the first fluid tank to modulate the application of the spring brake according to a demand on the control line.

Clause 8. A trailer brake system according to any of the preceding clauses wherein the auxiliary unit includes:
a first port providing a first inlet for connection to the second fluid tank,
a second port providing a second inlet for connection to the control line, and
an third port providing a first outlet for connection to the service brake.

Clause 9. A trailer brake system according to any of clauses 2 or clause 3 to 8 where further independent on clause 2, wherein a modulator valve is provided between the third port and the fourth port which is electrically operable by the ECU to provide build, hold and exhaust brake states in the spring brake.

Clause 10. A trailer brake system according to clause 9 wherein an output of the modulator valve controls a relay valve, which is connected to the spring brake.

The further clauses below set out additional exemplary features of further embodiments.

Clause 11. A trailer brake system including:
a spring brake, configured to apply a braking force to an associated wheel when a pressure in its brake chamber is below a threshold, and a service brake, configured to apply a demanded braking force dependent on a pressure present in its brake chamber,
a master unit and an auxiliary unit,
the master unit includes an electronic control unit that receives and processes signals including a CAN bus connection from a towing vehicle system, and controls a state of one or more valves, an input from a supply line, an input from a control line, and an output to the spring brake,
the auxiliary unit including an electronic control unit, which receives control signals from the master unit and relays signals to the master unit, and an output to the service brake, and
a first fluid tank and a second fluid tank, wherein the first fluid tank is filled by the supply line and connects to an inlet of the master unit and the second fluid tank is filled by the supply line and connects to an inlet of the auxiliary unit.

Clause 12. A trailer brake system for a trailer including:
an electronic control unit for sending and receiving signals;
a spring brake, which is releasable by a supply of fluid,
a service brake, which is applied by the supply of fluid,
a control line for delivering fluid according to a brake demand,
a supply line for delivering a continuous supply of fluid,
a first fluid tank and a second fluid tank, each connected to the supply line via a separate connection and filled from the supply line, wherein the first fluid tank is connected to the spring brake and not to the service brake and the second fluid tank is connected to the service brake and not to the spring brake.

Clause 13. A trailer brake system according to clause 11 or 12 wherein the first fluid tank, a fluid line between the first fluid tank and the spring brake, and the connected spring brake forms a spring brake circuit and wherein the second fluid tank, a fluid line between the second fluid tank and the service brake, and the connected service brake forms a service brake circuit.

Clause 14. A trailer brake system according to clause 13 and claim 11 wherein the spring brake circuit also includes the master unit, which is located between the first fluid tank and the spring brake and wherein the service brake circuit also include the auxiliary unit, which is located between the second fluid tank and the service brake.

Clause 15. A trailer brake system according to any of the preceding clauses wherein the first fluid tank is fed through a pressure protection valve, such that the first fluid tank fills only when a pressure in the supply line exceeds a predetermined value, optionally the pressure protection valve prevents back flow from the first fluid tank towards the supply line.

Clause 16. A trailer brake system according to any of the preceding clauses wherein the second fluid tank is fed through a non-return valve, so that fluid cannot return from the second fluid tank towards the supply line.

Clause 17. A trailer brake system according to any of the preceding clauses including a dedicated park valve for park and/or shunt functionality and wherein the first and second fluid tanks are both fed from ports of the park valve.

Clause 18. A trailer brake system according to any of the preceding clauses including a first pressure sensor on the control line.

Clause 19. A trailer brake system according to any of the preceding clauses including a second pressure sensor on a fluid line between the second fluid tank and the service brake.

Clause 20. A trailer brake system according to clause 16 and clause 13 wherein the second pressure sensor outputs a signal relating to a pressure in the service brake circuit.

Clause 21. A trailer brake system according to any of the preceding clauses including a shuttle valve between the control line and the supply line.

Clause 22. A trailer brake system according to any of the preceding clauses wherein an output of the second fluid tank connects to a second pressure protection valve, which feeds a suspension system, such that pressure in the second fluid tank above a predetermined value is used in levelling control.

Clause 23. A trailer brake system according to clause 22 where additionally dependent on at least claim 12 wherein a pressure in the suspension system is monitored by the auxiliary unit.

Clause 24. A trailer brake system according to any of the preceding clauses including a first power line which includes a supply voltage and a CAN connection and a second power line which includes a secondary supply voltage and optionally includes stop lamp signals or another communication line.

Clause 25. A trailer brake system according to clause 24 where further dependent on at least clause 12 wherein the first and second power lines connect to the master unit and a third power line is connected between the master unit and the auxiliary unit, optionally the third power line also includes a local CAN connection between the master unit and the auxiliary unit.

Clause 26. A trailer brake system according to claim 24 where further dependent on at least clause 12 wherein the first power line is connected directly to the master unit and the second power line is connected to a distributor device, which relays the second power line to the master unit.

Clause 27. A trailer brake system according to clause 26 wherein the distributor device also receives a power and local CAN connection from the master unit and connects the power and local CAN connection to the auxiliary unit.

Clause 28. A trailer brake system according to clause 11 or any of clauses 13 to 27 where dependent on claim 1 wherein the master unit includes:
a first port providing a first inlet for connection to the supply line
a second port providing a second inlet for connection to the first fluid tank a third port providing a third inlet,
a fourth port providing a first outlet for connection to the spring brake and which receives the pressure from the third inlet, and
a fifth port providing a second outlet to provide a feedback loop from the first and second ports to the third port.

Clause 29. A trailer brake system according to clause 28 wherein a shuttle valve is provided with an inlet connected to the control line and the fifth port and the outlet connected to the third port.

Clause 30. A trailer brake system according to clause 29 wherein the shuttle acts to provide anti-compound functionality by inhibiting the application of the spring brake and the service brake at the same time.

Clause 31. A trailer brake system according to any of clauses 28 to 30 wherein the fourth port connects to the spring brake via a spring brake control valve, which operates to control the supply of fluid to the spring brake.

Clause 32. A trailer brake system according to any of clauses 28 to 31 wherein an electrically operable override valve is connected to the first port, second port and the third port, such that if pressure in the supply line falls below a predetermined value, the first fluid tank is connected to the spring brake instead of the supply line.

Clause 33. A trailer brake system according to clauses 31 and 32 wherein if the master unit detects that the pressure in the service brake circuit falls below a predetermined value, the master unit is configured to use the first fluid tank to modulate the application of the spring brake according to a demand on the control line.

Clause 34. A trailer brake system according to clause 11 or any of clauses 13 to 33 where dependent on claim 1 wherein the auxiliary unit includes:
a first port providing a first inlet for connection to the second fluid tank,
a second port providing a second inlet for connection to the control line, and an third port providing a first outlet for connection to the service brake.

Clause 35. A trailer brake system according to any of the preceding clauses wherein the first fluid tank is not connected to the service brake and wherein the second fluid tank is not connected to the spring brake

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Although certain example embodiments of the invention have been described, the scope of the appended claims is not intended to be limited solely to these embodiments. The claims are to be construed literally, purposively, and/or to encompass equivalents.

## Claims

1. A trailer brake system for a trailer including:
an electronic control unit for sending and receiving signals;
a spring brake, which is releasable by a supply of fluid,
a service brake, which is applied by the supply of fluid,
a control line for delivering fluid according to a brake demand,
a supply line for delivering a continuous supply of fluid,
a first fluid tank and a second fluid tank, each connected to the supply line via a separate connection and filled from the supply line, wherein the first fluid tank is connected to the spring brake and not to the service brake and the second fluid tank is connected to the service brake and not to the spring brake and wherein the first fluid tank is fed through a pressure protection valve, such that the first fluid tank fills only when a pressure in the supply line exceeds predetermined value.

2. A trailer brake system according to claim 1 wherein the first fluid tank, a fluid line between the first fluid tank and the spring brake, and the connected spring brake forms a spring brake circuit and wherein the second fluid tank, a fluid line between the second fluid tank and the service brake, and the connected service brake forms a service brake circuit.

3. A trailer brake system according to any of the preceding claims wherein the pressure protection valve prevents back flow from the first fluid tank towards the supply line.

4. A trailer brake system according to any of the preceding claims wherein the second fluid tank is fed through a non-return valve, so that fluid cannot return from the second fluid tank towards the supply line
AND / OR
including a dedicated park valve for park and/or shunt functionality and wherein the first and second fluid tanks are both fed from ports of the park valve
AND / OR
including a first pressure sensor on the control line.

5. A trailer brake system according to any of the preceding claims including a second pressure sensor on a fluid line between the second fluid tank and the service brake.

6. A trailer brake system according to claim 5 and claim 2 wherein the second pressure sensor outputs a signal relating to a pressure in the service brake circuit.

7. A trailer brake system according to any of the preceding claims including a shuttle valve between the control line and the supply line.

8. A trailer brake system according to any of the preceding claims wherein an output of the second fluid tank connects to a second pressure protection valve, which feeds a suspension system, such that pressure in the second fluid tank above a predetermined value is used in levelling control.

9. A trailer brake system according to claim 10 wherein a pressure in the suspension system is monitored by the auxiliary unit.

10. A trailer brake system according to any of the preceding claims including a first power line which includes a supply voltage and a CAN connection and a second power line which includes a secondary supply voltage and optionally includes stop lamp signals or another communication line.

11. A trailer brake system according to any one of the preceding claims wherein the electronic control unit includes:
a first port providing a first inlet for connection to the supply line
a second port providing a second inlet for connection to the first fluid tank
a third port providing a third inlet,
a fourth port providing a first outlet for connection to the spring brake and which receives the pressure from the third inlet, and
a fifth port providing a second outlet to provide a feedback loop from the first and second ports to the third port.

12. A trailer brake system according to claim 11 wherein a shuttle valve is provided with an inlet connected to the control line and the fifth port and the outlet connected to the third port,
AND OPTIONALLY
wherein the shuttle acts to provide anti-compound functionality by inhibiting the application of the spring brake and the service brake at the same time.

13. A trailer brake system according to any of claims 11 to 12 wherein the fourth port connects to the spring brake via a spring brake control valve, which operates to control the supply of fluid to the spring brake
AND / OR
wherein an electrically operable override valve is connected to the first port, second port and the third port, such that if pressure in the supply line falls below a predetermined value, the first fluid tank is connected to the spring brake instead of the supply line

14. A trailer brake system according to claims 13 wherein if the electronic control unit detects that the pressure in the service brake circuit falls below a predetermined value, the electronic control unit is configured to use the first fluid tank to modulate the application of the spring brake according to a demand on the control line.

15. A trailer brake system according to any of the preceding claims wherein the first fluid tank is not connected to the service brake and wherein the second fluid tank is not connected to the spring brake
